# EUROPEAN PATENT SPECIFICATION

(11) **EP 3 134 318 B1**
(45) Date of publication and mention of the grant of the patent: **03.06.2020**
(21) Application number: 15736859.8
(22) Date of filing: 22.04.2015
(51) Int. Cl.: B64D 11/04

(54) **AIRCRAFT GALLEY CONFIGURATION**
FLUGZEUGBORDKÜCHENKONFIGURATION
CONFIGURATION D'OFFICE D'AÉRONEF

(30) Priority: 25.04.2014 US 201461984211 P
(43) Date of publication of application: 01.03.2017
(73) Proprietor: Bombardier Inc., Dorval, QC H4S 1Y9 (CA); SHORT BROTHERS PLC, Belfast BT3 9DZ (GB)
(72) Inventor: MIRON, Bruno, Coteau du Lac, Québec J0P 1B0 (CA); TREMBLAY, Michel, Ste-Dorothée, Québec H7X 2M4 (CA); LADD, Gradyn, Pincourt, Québec J7W 5L2 (CA); TREMBLAY, Benjamin, St-Roch de l'Achigan, Québec J0K 3H0 (CA)
(74) Representative: HGF Limited
(86) International application number: PCT/IB2015/052946
(87) International publication number: WO 2015/162575

(56) References cited:
- EP-A2- 2 316 733
- US-A1- 2012 285 335
- US-A1- 2013 076 214
- US-A1- 2013 248 649
- US-A1- 2013 248 652

## Description

### Field of the Invention

The present invention concerns configurations for the interior architecture of an aircraft, specifically, the layout of an efficient galley within an aircraft.

### Background

It is known to passengers in commercial and business aircraft that the food service or galley section of an aircraft is typically very cramped and poorly laid out. Document US2012/0285335 A1 discloses an aircraft galley with a beverage center including a hot beverage maker to receive a beverage server container and a combination oven-chiller unit connected to the beverage center. The oven-chiller unit employs a heating mode to heat food items and a refrigerator mode to cool food and beverage items, and receives replaceable meal carrier rotables. The beverage center may also include a drip tray. Documents US2013/0248649 A1, US2013/0248652 A1, EP 2 316 733 A2 and US2013/0076214 A1 disclose further aircraft galley systems. There is often a limited amount of work surface available. There is seemingly a random organization of food storage and accessory cabinets. This layout is typically inefficient in that food and accessories are stored without regard to the needs of the aircraft passenger service staff, often referred to as the flight attendants. It is readily apparent that the emphasis in aircraft galleys is on a very small plan in order to maximize the seating capacity of the aircraft and giving little regard to galley efficiencies.

Air travelers all recognize the routine chaotic scene in an aircraft galley when it is time for a meal service. There tends to be a very chaotic scene even when routine snacks and drinks are being served. Whether there is one or more server, there is often a hunt for items. Much energy is wasted with back and forth movement by a server. Even stocking of a galley between flights can be difficult as a ground service needs to be figure out where all of the replenishment items are supposed to be stored.

### Summary

Accordingly, it is an object of the present invention to overcome inefficient galley designs and to create a galley layout having a more intuitive and efficient layout that fosters better work flow.

The invention is recited in claim 1. Selected further features are recited in the dependent claims. The present invention provides for an aircraft comprising an aircraft galley, the aircraft galley having a configuration extending along a longitudinal axis of a fuselage of the aircraft and on one side of the aircraft that includes a forward end closest to a front of the aircraft and a rear end on an opposite longitudinal end of the galley and closest to a passenger section of the aircraft, and a plurality of galley modules disposed in the galley between the forward and rear ends of the galley. The galley modules comprise a storage module, a heating module, and a preparation module. The storage module comprises a refrigerator. The preparation module comprises a sink having a spigot and a faucet. The storage module is disposed at the forward end of the galley, the preparation module is disposed closer to the rear end of the galley than the storage module, and the heating module is disposed between the storage module and the preparation module. An efficient work flow in the direction of the passenger section is created by the galley configuration.

In one contemplated embodiment, the aircraft galley configuration further includes a service module disposed adjacent to the preparation module, at the rear end of the aircraft galley.

It is contemplated that the heating module may be disposed adjacent to the storage module, between the storage module and the rear end of the galley.

It is also contemplated that the preparation module may be disposed adjacent to the service module, between the service module and the forward end of the aircraft galley.

Still further, the galley modules are contemplated to be disposed adjacent to each other and, from the forward end to the rear end of the aircraft galley, such that they are positioned in the order of the storage module, the heating module, the preparation module, and the service module.

In one contemplated embodiment, the storage module may be a refrigerator.

It is contemplated that the heating module may be an oven including, but not limited to a stem oven, a microwave oven and/or a convection oven.

The present invention also provides for an aircraft galley configuration where the preparation module includes a counter.

It is contemplated that the service module may include a hot beverage maker.

In another contemplated embodiment, the heating module may include a first retractable, pull-out, flat work surface.

Still further, the service module may include a second retractable, pull-out, flat work surface.

Where two pull out work surfaces are provided, a C-shaped work surface may be created by the two work surfaces.

Another aspect of the present invention provides that the preparation module may include an accessory cabinet for storage of dishes and drinkware.

It is also contemplated that the galley modules include several drawers and cabinet doors. The drawers and doors define lines and the drawers and doors are aligned to create a uniform line across the drawers and doors of the galley.

There is also disclosed an apparatus for a cabinet door system for use in an aircraft galley that includes a first galley cabinet disposed underneath a second, overhanging galley cabinet wherein the overhanging galley cabinet defines a substantially flat surface on the bottom side of the overhanging cabinet and is disposed above a galley cabinet door on a front of the first galley cabinet, a bifold door that includes two panels forming the galley cabinet door, a top panel and a bottom panel, each panel having a width substantially equal to a full horizontal width of the galley cabinet door and a height less than a full vertical height of the galley cabinet door, and further wherein the combined height of the top panel and the bottom panel is substantially equal to the full vertical height of the galley cabinet door, a first hinge disposed along an adjacent horizontal edge, connecting the top panel to the bottom panel, and a second hinge disposed on a top side of the top panel and opposite the second hinge. The top and bottom panels may be rotated up to lay flat relative to one another, adjacent to the flat surface on the bottom side of the overhanging galley cabinet. The cabinet door may be releasably secured under the overhanging galley cabinet.

It is contemplated, in an alternative embodiment, that the cabinet door also includes first and second tracks disposed on opposing vertical edges of the bifold door, and first and second guides configured on opposing bottom sides of the bottom panel slidably retained in the first and second tracks, respectively. The top and bottom panels are substantially the same vertical height and may be retracted upwardly in the first and second tracks to a folded storage position underneath the overhanging galley cabinet.

Still further, the bifold door may include a handle in one of either the top panel or the bottom panel, disposed proximate to the hinge edge to facilitate opening and upward rotation of the top and bottom panels to the folded storage position.

### Brief Description of the Drawings

One or more embodiments of the present invention will be described in connection with the figures appended hereto, in which:
Fig. 1 is a front perspective view of a galley section of an aircraft as described herein;
Fig. 2 is another front perspective view of the galley section shown in Fig. 1 further demonstrating the work flow of the galley shown therein;
Fig. 3 is a right side perspective view of another example of a galley for an aircraft;
Fig. 4 is a left side perspective view of the same galley shown in Fig. 3;
Fig. 5 is a perspective view of a sink that may be used in connection with a galley as described herein;
Fig. 6 is a perspective view of a work area in a galley as described herein;
Fig. 7 is a perspective view of a work area as shown in Fig. 6 except with various features having covers placed thereon;
Fig. 8 is a further example of a work surface in an aircraft galley;
Fig. 9 is a perspective view of a kettle that may be alternatively used in an aircraft galley;
Fig. 10 is a perspective geometric view of a layout of a galley as described herein;
Fig. 11 is a cross-sectional view taken along lines AA shown in Fig. 10;
Fig. 12 is a side cross-section view taken along lines BB of Fig. 10;
Fig. 13 is a top plan view of a galley taken along lines CC of Fig. 10;
Fig. 14 is a top plan cutaway view of a galley taken along lines EE of Fig. 10;
Fig. 15 is a top plan view of a cutaway view taken along lines DD of Fig. 10;
Fig. 16 is a front view of an oven having a ventilation grill mounted around the perimeter of the face thereof;
Fig. 17A is one alternative of a styling cap storage area;
Fig. 17B is a second example of a styling cap storage area use;
Fig. 18 is a perspective view of a bifold door as may be deployed in connection with a galley as described herein;
Fig. 19 is a perspective view of the bifold door in the closed position as compared with Fig. 18; and
Fig. 20 is a rear perspective view of the storage area above and behind the bifold door as shown in Figs. 18 and 19.

### Detailed Description

The description of the invention set forth herein focuses on one or more examples of the invention. The examples are intended to be exemplary of the invention and not limiting of the scope of the invention. As should be apparent to those skilled in the art, the examples described herein present aspects of the invention for which there are numerous variations and equivalents. Those variations and equivalents are intended to be encompassed by the present invention.

The various figures presented herein are contemplated to be employed in connection with an aircraft typically referred to as a business aircraft or a personal aircraft. Business and personal aircraft share many features with commercial aircraft, except that business and private aircraft tend to be more modest in size and offer a different interior configuration for the passengers. While aspects of the present invention are intended to be employed in connection with a business aircraft or a private aircraft, it is noted that one or more aspects of the present invention may be employed on a commercial aircraft. Separately, it is contemplated that one or more aspects of the present invention may be employed on other vehicles, including recreational vehicles, boats, trains, etc., without departing from the scope of the present invention.

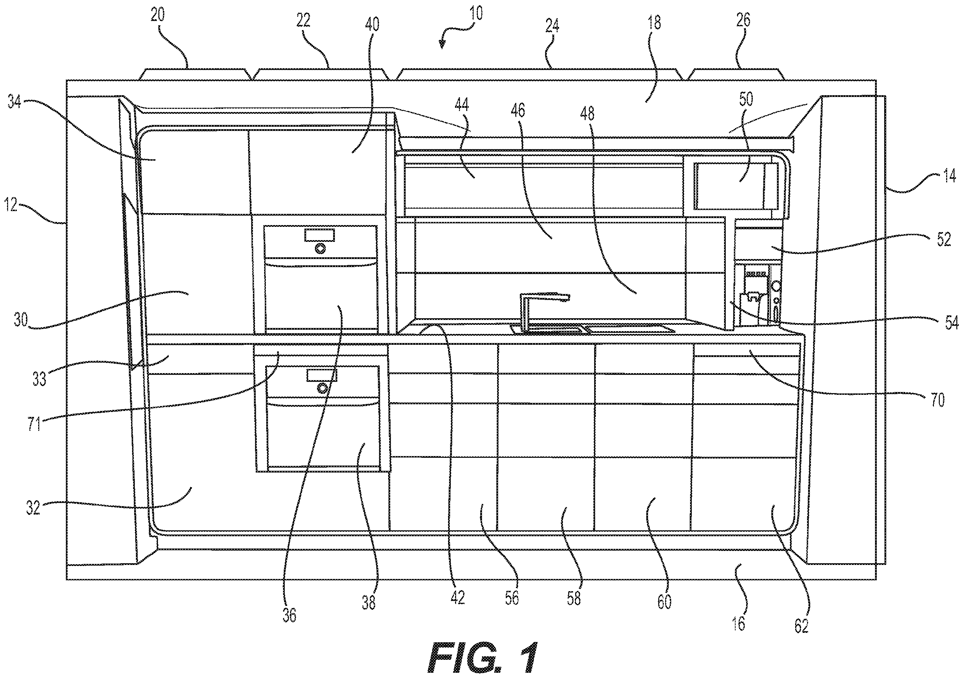

Fig. 1 is front perspective view of an aircraft galley configuration 10. In this view, the galley configuration 10 displays the galley with a portion of the ceiling 18 and floor 16 shown to give the context of the aircraft galley. Also, the galley configuration 10 as shown would be on the left hand side of an aircraft when facing the front of the aircraft such that the forward end 12 of the galley is toward the front of the aircraft and the rear end 14 of the galley is adjacent the passenger section, toward the back of the aircraft. It is noted that, when viewed from the perspective of a person standing in an aisle of the aircraft, facing the cockpit, the galley configuration is on the right hand side of the aircraft in Fig. 1.

The galley configuration 10 includes four galley modules- a storage module 20 (also referred to as a "chilled area"), a heating module 22, a preparation module 24, and a service module 26. These galley modules 20, 22, 24 and 26 are shown in order from the forward end 12 to the rear end 14 of the galley 10.

The storage module 20 of the galley 10 includes refrigeration units 30 and 32 and a chilled drawer 33. There is also shown a storage cabinet 34. It is intended that this storage module 20 may include only one refrigerator or more than the two refrigerators 30 and 32 as shown. This storage module 20 is the primary portion of the galley 10 where food items are stored prior to being cooked and served to a passenger.

The second module of the galley configuration 10 is the heating module 22. In Fig. 1, the heating module 22 shows a steam oven 36, a microwave/convection oven 38, and a storage cabinet 40. There could be more and/or different types of cooking and heating units in this heating module 22. Moreover, the positions of the microwave/convection oven 38 and the steam oven 36 may be reversed without departing from the scope of the present invention. Conveniently, and for the sake of efficiency, the heating module 22 is directly adjacent the storage module 20 so that food may be moved directly from the storage module 20 into the heating module 22 during the food service process.

The next adjacent preparation module 24 includes a countertop 42 that is a work surface for a food preparer to handle food that is to be heated and served to a passenger. The preparation module 24 includes lower cabinets 56, 58 and 60 where various plates and pans and other preparation items may be stored. There is also an upper cabinet 44 where, for instance, glassware may be stored. There is also a storage area behind the two panels 46 and 48 of a bifold door. It is readily apparent that the number, size and arrangement of doors and storage compartments may be varied depending on the space and size of a particular galley configuration 10.

Finally, the service module 26 is on the rear end 14 of the galley configuration 10. This is the section of the galley configuration 10 that is contemplated to be positioned immediately adjacent or closest to the passenger section toward the rear of an aircraft. As shown, the service module 26 includes an aircraft cabin control panel 50 which is a computer interface that allows for control over most of the internal environmental and communications equipment in the passenger section of the aircraft. The control panel 50 also may provide controls over one or more of the appliances within the galley 10. The control panel 50 also may be utilized for maintenance. There is a divider 54 that creates a slot into which is placed a hot beverage maker 52. Cabinets 62 are provided in the lower section of the service module 26.

Also shown in the galley configuration 10 are retractable, pull-out, flat work boards 70 and 71. These work surfaces 70 and 71 give a food service provider extra space if or when desired. Ergonomically, these work surfaces 70 and 71 are on either side of the preparation module 24 in order to present a more efficient and ergonomically sensible work area. Use of either one of these work surfaces 70 or 71 creates an L-shape work surface from a top perspective. Use of both of the work surfaces 70 and 71 creates a C-shape work space from the same view.

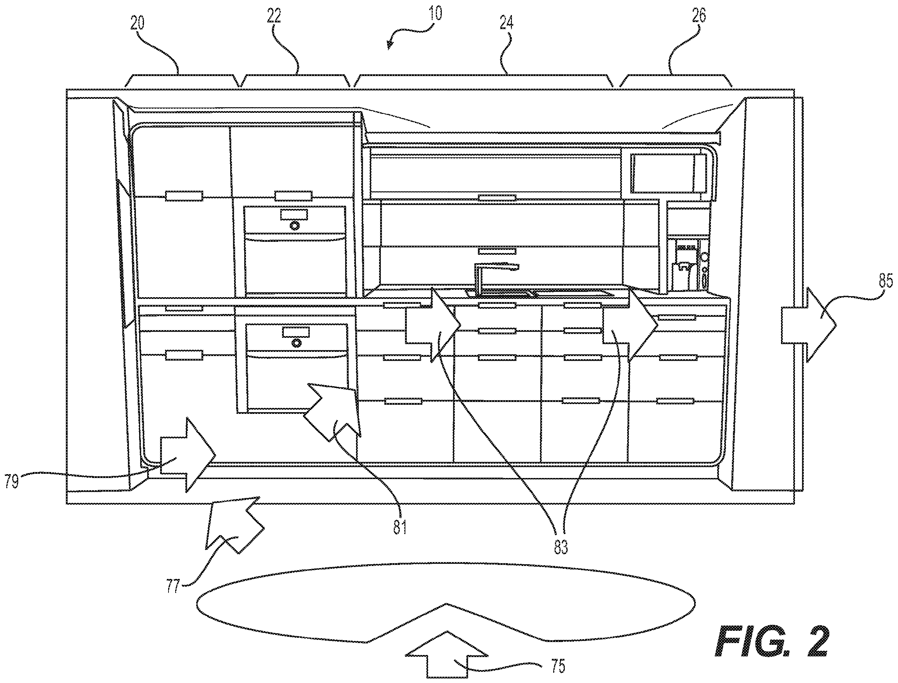

Fig. 2 is another view of the galley configuration 10. The work flow through the galley is shown through the use of the arrows shown in Fig. 2. As can be seen, the various galley modules 20, 22, 24 and 26 are as shown in Fig. 1. They have the same forward toward rear, left to right configuration. As shown in Fig. 2, food will arrive onboard an aircraft as demonstrated by arrow 75. This arrival is typically through an aircraft door that is situated substantially opposite the galley configuration 10. Arrow 77 shows that the food is then appropriately stored in the storage module 20. When the time is appropriate, arrow 79 shows that food is moved from the storage module 20 to the heating module 22. Arrow 81 shows that the heated food moves from the heating module 22 to the preparation area 24. Arrows 83 show the food being prepared and passed backward to the service module 26 where, as indicated by arrow 85, the food is then presented to the passengers.

It is readily apparent that the left-to-right flow of work shown in Fig. 2 is an efficient order of work. Each of the modules 20, 22, 24, 26 is stationed relative to the other to enhance this work flow. Since most aircraft have an entry door on the right side of the fuselage when facing the front of the aircraft, this left-to-right flow is considered to be applied in most environments. However, in the event that the galley configuration 10 is set up on the right hand side of the fuselage of an aircraft, then the mirror image of this galley configuration 10 is contemplated to be employed in the alternative. The flow would move from right to left and the position of the respective modules would be reversed.

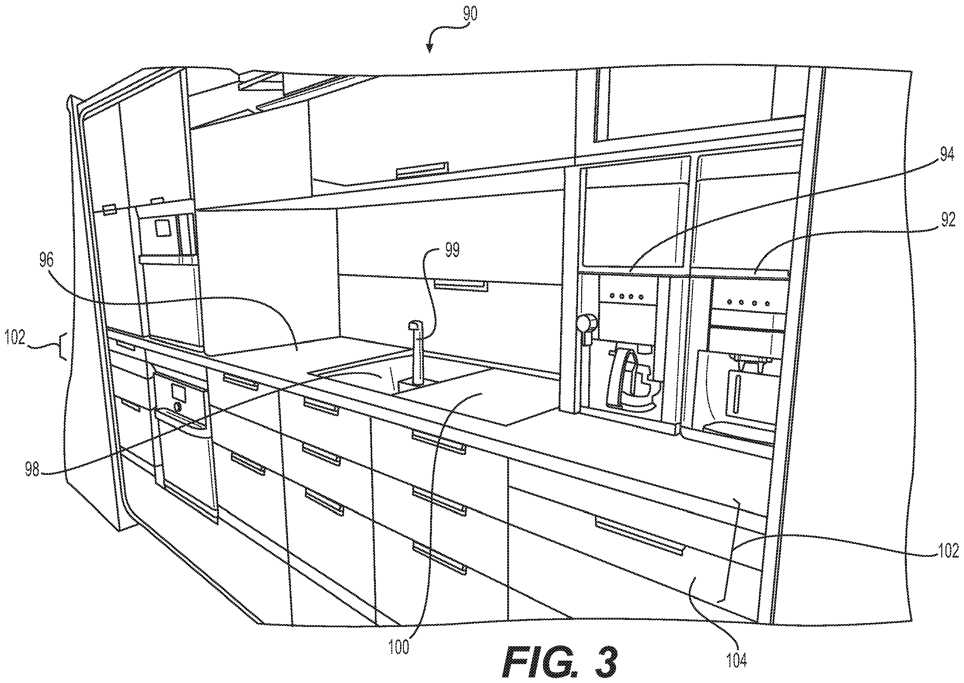

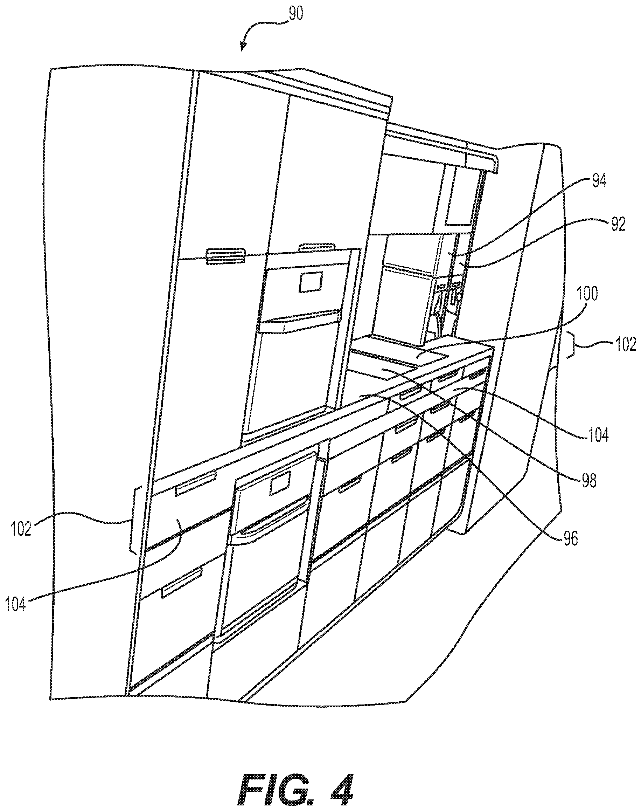

Figs. 3 and 4 are right perspective and left perspective views of an alternative example of a galley configuration 90. In this galley configuration 90, there are shown two different hot beverage makers 92 and 94, for instance, a drip coffee maker 94 and an espresso maker 92. As is readily apparent in Figs. 3 and 4, there is a countertop 96 and a sink 98 configured and set into the countertop 96. The sink 98 includes a spigot 99. Adjacent to the sink 98 is a cutting board, cooktop cover, or other work surface 100.

A visual, uniform line of sight is also demonstrated in Figs. 3 and 4. As shown, the parallel section 102 that runs the lateral length of the galley configuration 90 is lighter in tone or color than the remainder of the galley. For instance, drawer faces 104 are similarly light colored and are aligned across the entire front of the galley configuration 90. This uniform line of sight creates a pleasing visual impression. It is also noted that other aspects of the galley 10, 90 present a uniform line of sight. For example, the bottom edge of the upper cabinet 44 forms a continuous line of sight with respect to the top edge of the microwave/convention oven 38, the upper refrigerator 30, and the hot beverage maker 52.

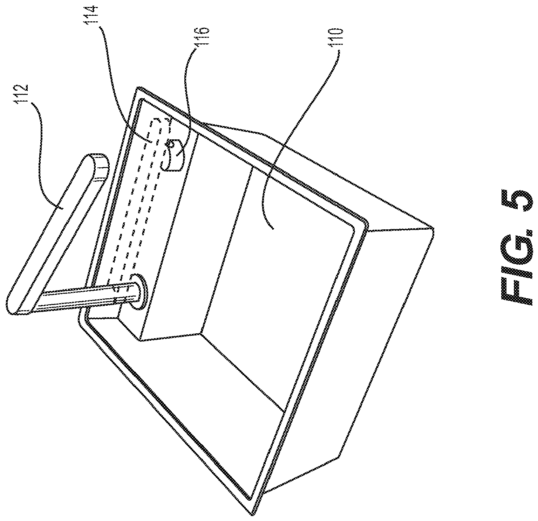

Fig. 5 illustrates an example of a sink 110 having a spigot 112 and faucet 116. The spigot 112 is shown in the upright position. Fig. 5 also demonstrates the spigot 114 in its retractable and down position. The spigot 112, 114 may be reconfigured from the deployed or upright position 112 and the stowed or retracted position 114 by a flight attendant or other user.

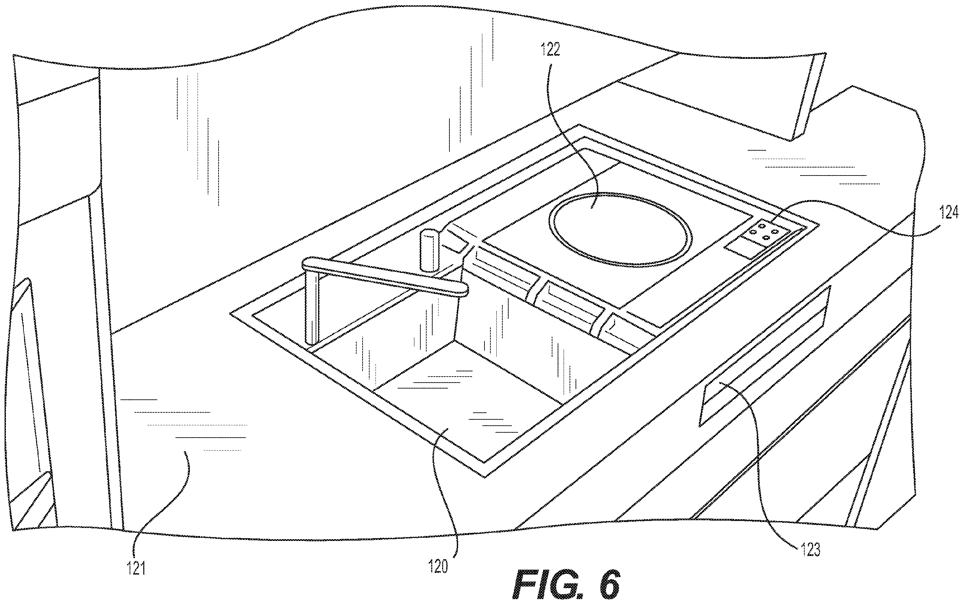

Fig. 6 illustrates a sink 120 set into a countertop 121. Also shown is an optional cooktop 122 with a vent 123 and electronic controls 124. The cooktop 122 may be of any variety including, but not limited to, an induction-based cooking surface. As may be apparent, while hot surfaces are not prohibited in an aircraft, it is contemplated that an induction cooktop may be preferred to reduce the potential for exposed surfaces at elevated temperatures.

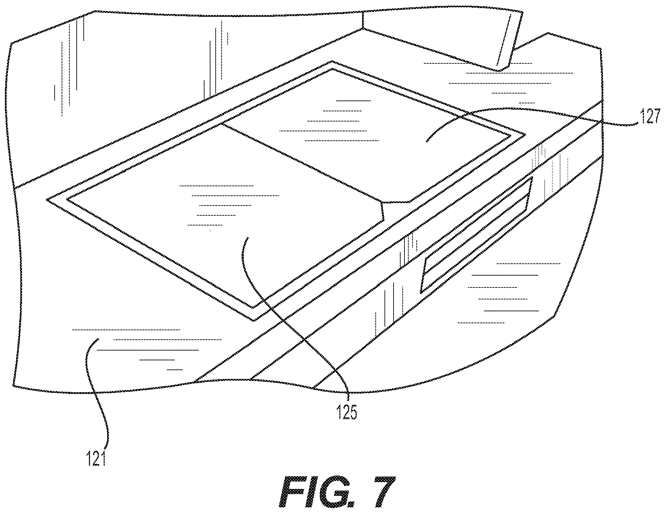

When not in use, as shown in Fig. 7, both the sink 120 and cooktop 122 are covered by surfaces 125 and 127. Alternatively, a single surface may be employed to cover both the sink 120 and the cooktop 122 simultaneously. As may be apparent, providing separate covers 125, 127 permits access to the sink 120 or the cooktop 122 independently of the other galley convenience.

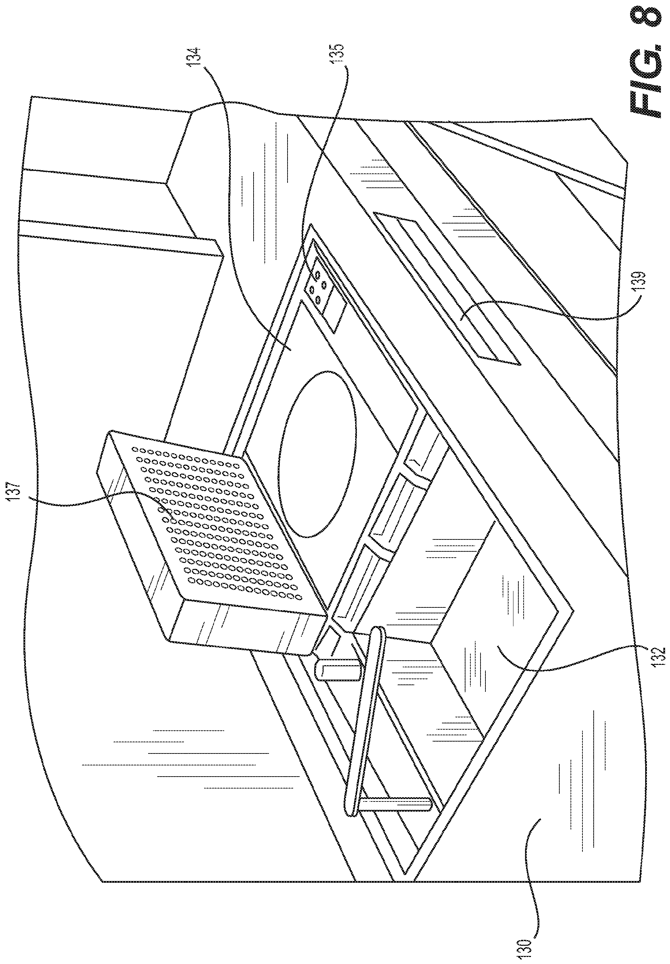

Fig. 8 illustrates a still further embodiment of a countertop 130 having a sink 132, a stove cooktop 134 with electronic controls 135, and a pop-up fume hood 137. The air ventilation 139 is shown as well. The pop-up fume hood 137 is provided to exhaust odors and smells associated with cooking items during their preparation. The pop-up fume hood 137 may exhaust to a suitable air filtration system, the details of which are not critical to the present invention.

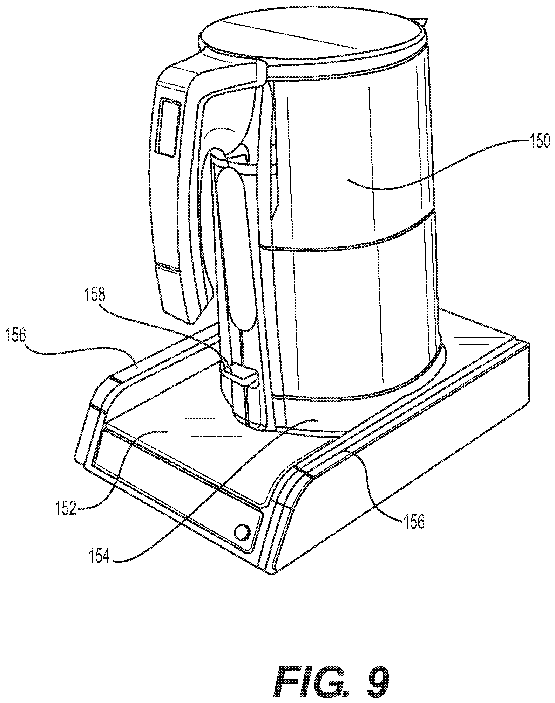

Fig. 9 illustrates an example of a hot beverage kettle 150 that is an optional appliance that may be located in the service module portion 24 of an aircraft galley 10, for example. The kettle may be mounted behind the bifold doors 46 and 48. The kettle 150 is releasably mounted on a base 152. A bottom flange 154 is provided at the base of the kettle 150 is engineered to fit within tracks 156 in the base 152. In this way, the kettle 150 is held by a friction fit within the base 152 so that it will not accidentally tip over. A manual lock 158 allows for the kettle 150 to be secured and unsecured as it is locked into and removed from the base 152 during use.

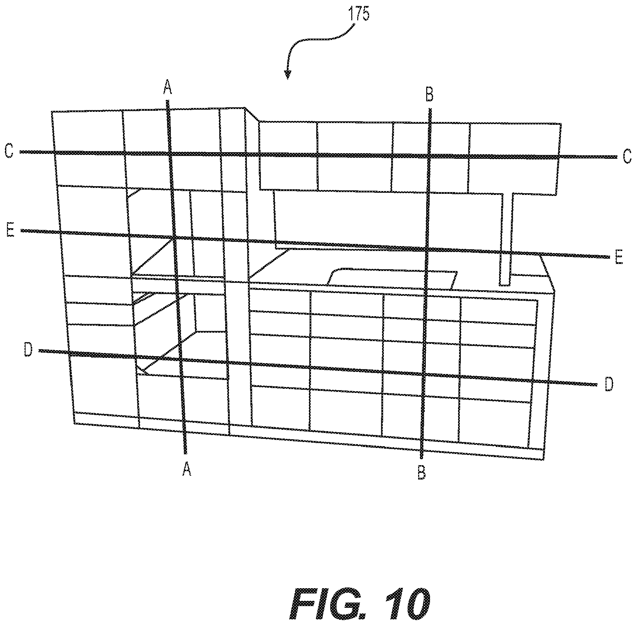

Fig. 10 is a perspective geometric block view of a galley configuration 175. This galley configuration 175 as shown is generally similar to the earlier examples of galley configuration 10 and galley configuration 90. One or more uniform lines of sight, both horizontally and vertically oriented, are illustrated.

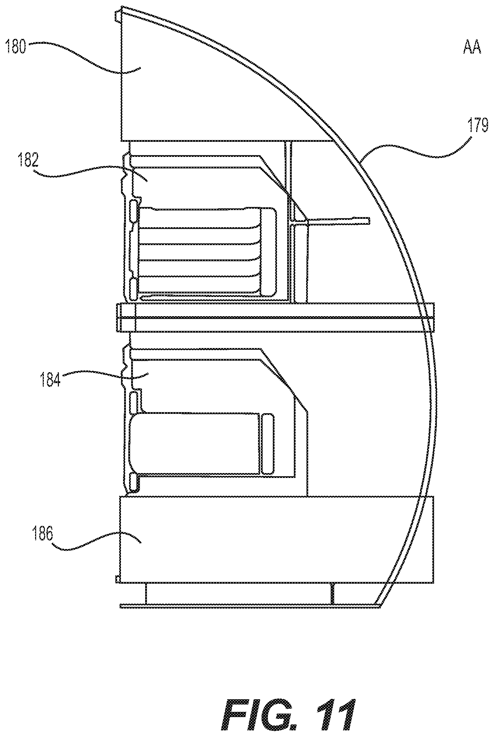

Looking along the side, cross-sectional view of lines AA, there is shown on Fig. 11 the side of the fuselage 179 of an aircraft. Then, beginning with the top of the configuration, there is shown a top cabinet storage area 180, a top oven 182 configured within the top space, a bottom oven 184 configured in the bottom space, and a storage area 186 on the bottom. The top oven 182 may be a microwave oven, a convection oven, or a combination of the two. Alternatively, any other type of oven may be employed in this upper location without departing from the scope of the present invention. The bottom oven 184 is contemplated to be a steam oven, but, as with the top oven 182, any other type of oven may be positioned at this location without departing from the present invention.

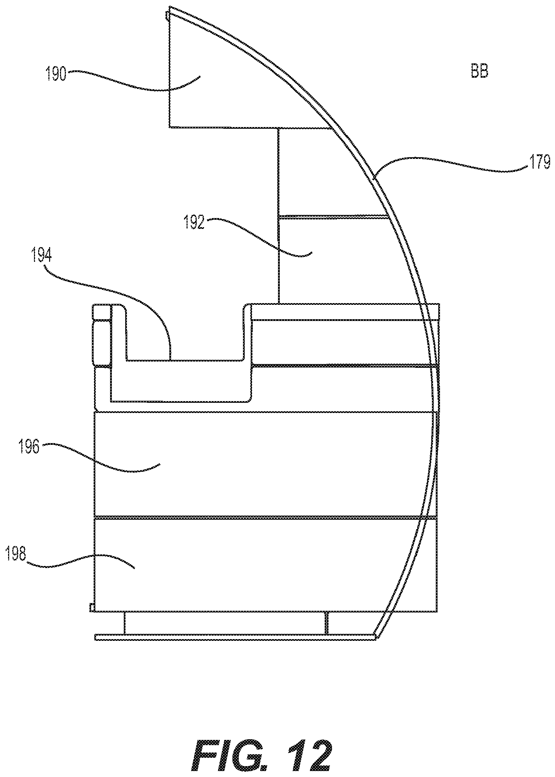

Turning now to Fig. 12, the view is a cross-sectional view taken along lines BB of Fig. 10. In Fig. 12, there is shown a storage area 190 above the sink 194 and storage drawers 196 and 198 below the sink 194. The storage area 190 above the sink 194 may be for glassware, as discussed above. In the area behind the sink 194, there is shown the storage area 192. Again, the wall of the fuselage 179 is shown to give context to the back of the galley 175.

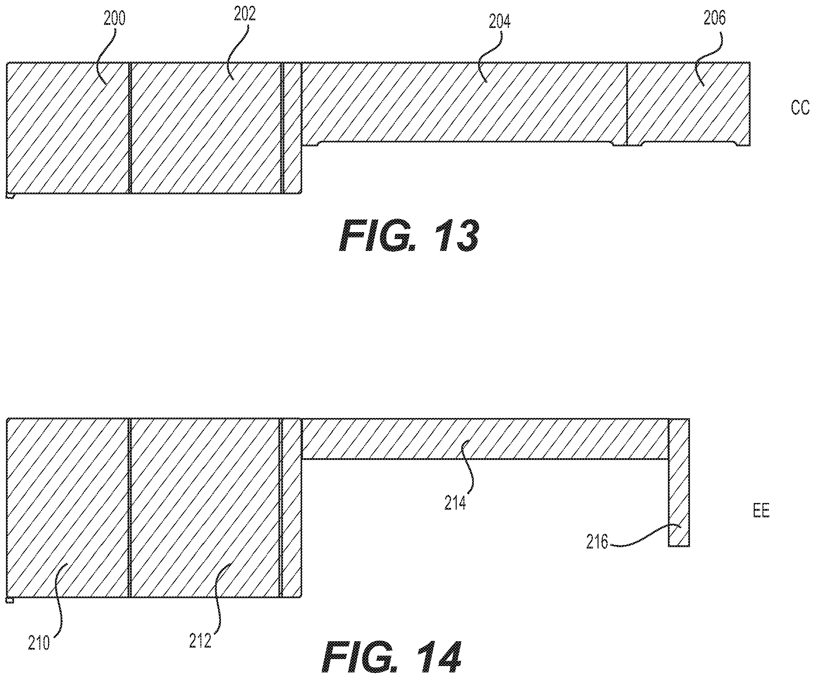

Fig. 13 shows the top plan view of the galley configuration 175, taken along lines CC indicated in Fig. 10. As shown, there are storage cabinets 200, 202, 204 and 206 along the longitudinal length of the galley configuration 175. The storage cabinet 204 may be employed as a glassware storage area, as discussed above.

Fig. 14 shows the top plan cross-sectional view, taken along lines EE illustrated in Fig. 10. As shown, there is a storage cabinet 210, an insert space 212 adapted to receive a microwave or other heating element, the storage area 214, and a divider 216.

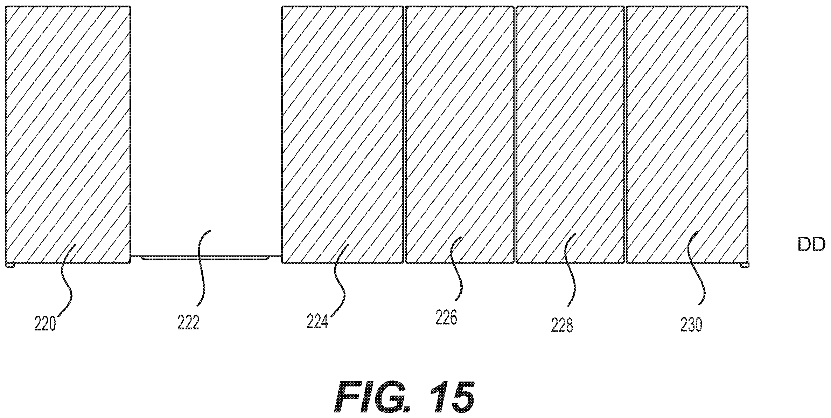

Fig. 15 is the top plan cross-sectional view taken along lines DD of Fig. 10. There is shown the storage cabinets 220, 224, 226, 228 and 230. There is also shown the space 222 where an oven or other heating device may be mounted within the configuration 175.

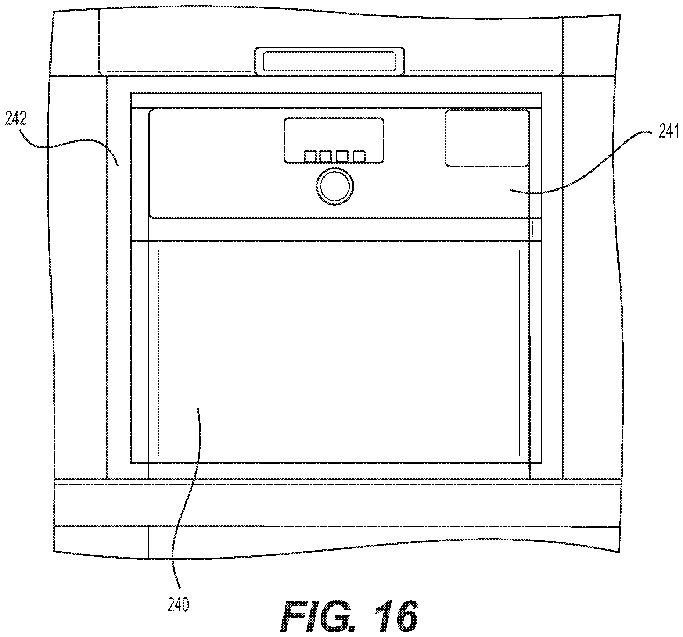

Fig. 16 illustrates an oven 240 and a cover 242 that is mounted around the perimeter of the oven 240 when inserted into its slot in a gallery configuration. The cover 242 leaves a half-inch air gap between the oven and cover that allows for air to circulate around the oven 240. The cover 242 also prevents any passenger or service provider from accidentally inserting objects between the oven 240 and the space above the oven within the slot where it is positioned. The cover 242 also provides a clean visual line around the perimeter of the oven 240. It is noted that, in the illustrated embodiment, the oven 240 is a steam oven that includes a water reservoir 241. The water reservoir 241 may be filled by an attendant, as required or as desired.

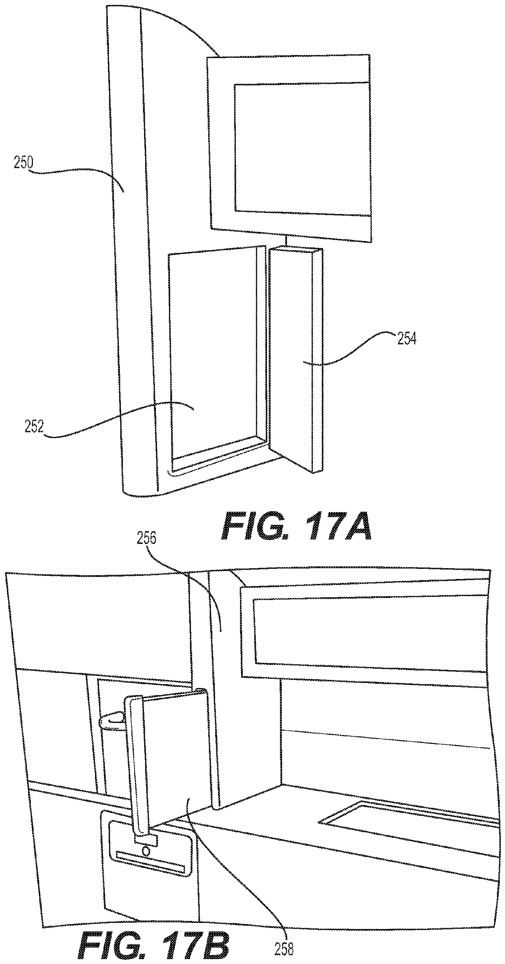

Figs. 17A and 17B show alternative embodiments of a divider 250 and 256 respectively that may be used in connection with a galley configuration. In Fig. 17A, the divider 250 includes a door 254 that opens into the space 252 within the divider. This space 252 may be used for storage of magazines, newspapers or other items. Similarly, in Fig. 17B, a sliding compartment 258, shaped as a narrow drawer, may be moved into and out of the divider 256. One example for use as demonstrated in Fig. 17B would be for the drawer 258 to store a sink and/or cooktop cover as earlier illustrated, for instance, as items 125 and 127, which are illustrated in Fig. 7.

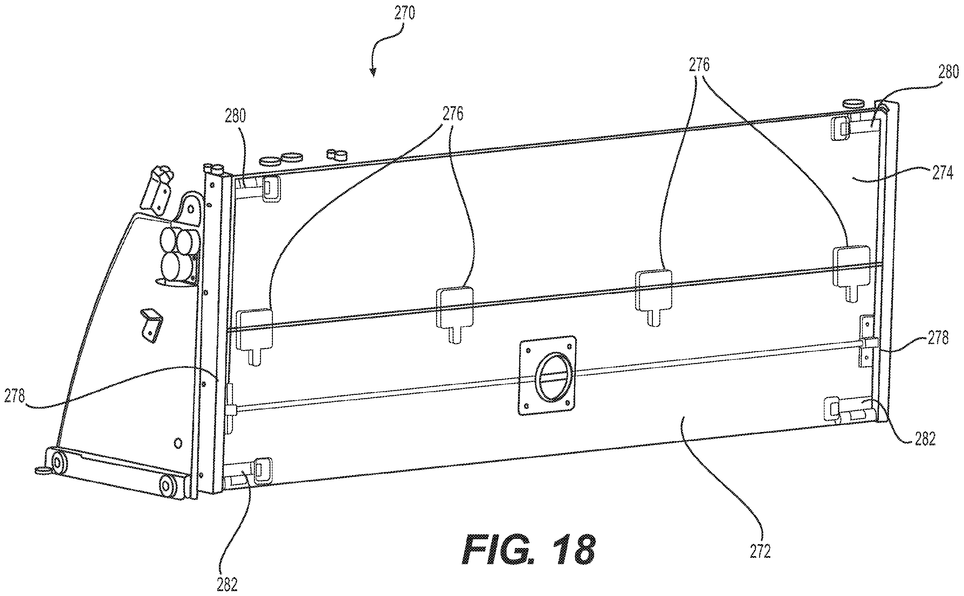

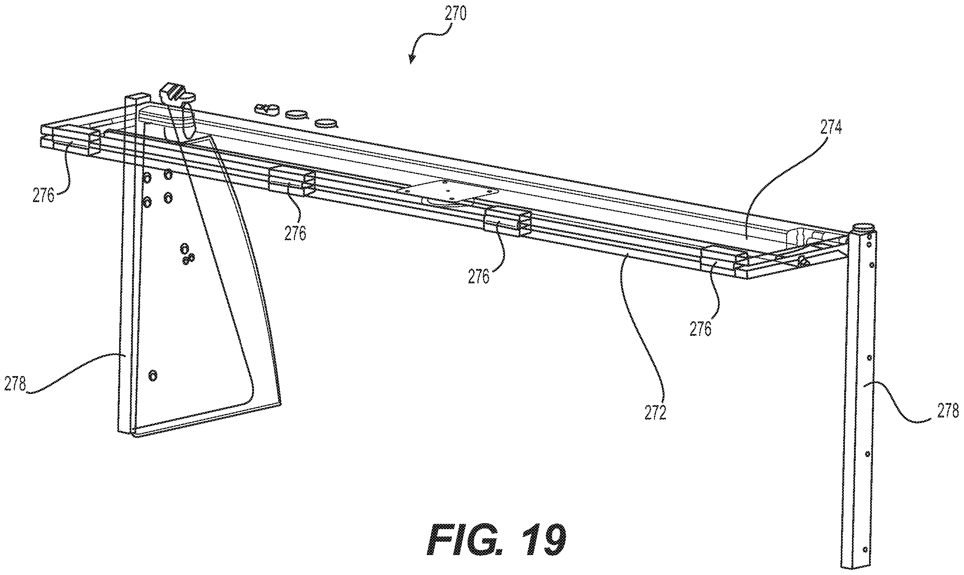

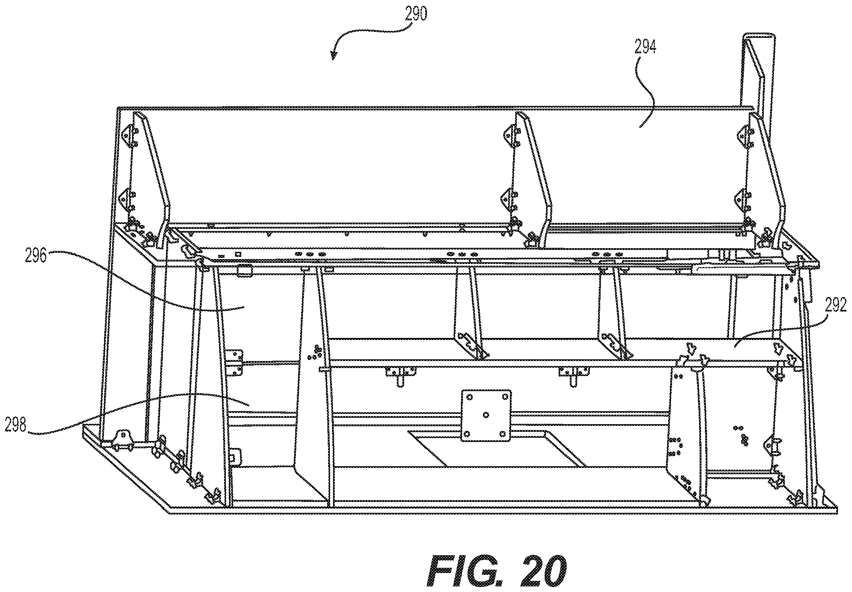

Figs. 18-20 illustrate first and second bifold door systems 270 and 290. In Figs. 18 and 19, the first bifold door system 270 includes a lower panel 272 and an upper panel 274. These upper and lower panels 272 and 274 extend along the entire horizontal length of the door system 270. The two panels 272 and 274 are hingedly connected to each other by hinges 276. There are tracks 278 on either side of the door system 270. Pins 282 are mounted on the opposite lower edge corners of the bottom panel 272 and extend into the tracks 278. Hinges 280 allow for the top panel to rotate. Accordingly, as shown in Fig. 20, the bottom panel 272 may rotate upwardly and nest against the bottom of the top panel 274. The bottom panel 272 is retained in that position with the pins 282 being retained within the tracks 278. As demonstrated in Fig. 20, the bifold panels 272 and 274 may fold up and be attached to the bottom surface of an overhead cabinet 294, such as a cabinet that may be used for storage of glassware, for example. As illustrated in Fig. 20, storage shelves 292 are positioned behind the panels 296 and 298 as shown in the door system 290.

The second bifold door system 290 differs from the first bifold door system in the arrangement of storage shelves 292 positioned behind the door panels.

Within the present specification there may be explicit or implicit references to aspects of safety. It is noted that any comments or implications with respect to safety are merely for purposes of the present discussion. As should be apparent to those skilled in the art any furniture and/or components that are incorporated into the interior space of an aircraft are subject to various federal regulations worldwide. As a result, any suggestion, whether explicit or otherwise, should not be taken as an indication that any component of an aircraft, whether currently produced or not, is more or less safe than any other component.

As indicated above, the present invention is not intended to be limited solely to the examples described and/or illustrated herein. To the contrary, there are numerous variations and equivalents that should be apparent to those skilled in the art based upon the examples described and/or illustrated herein. Those variations and equivalents are intended to be encompassed by the present invention as defined by the appended claims.

## Claims

1. An aircraft comprising an aircraft galley, the aircraft galley (10, 90) having a configuration extending along a longitudinal axis of a fuselage (179) of the aircraft and on one side of the aircraft, the galley comprising:
a forward end (12) of the galley closest to a front of the aircraft and a rear end (14) of the galley (10, 90) on an opposite longitudinal end of the galley and closest to a passenger section of the aircraft; and
a plurality of galley modules (20, 22, 24, 26) disposed in the galley (10, 90) between the forward and rear ends (12, 14) of the galley,
wherein the galley modules (20, 22, 24, 26) comprise:
a storage module (20) comprising a refrigerator (30, 32);
a heating module (22); and
a preparation module (24) comprising a sink (110) having a spigot (112) and a faucet (116),
wherein the storage module (20) is disposed at the forward end (12) of the galley (10, 90), the preparation module (24) is disposed closer to the rear end (14) of the galley (10, 90) than the storage module (20), and the heating module (22) is disposed between the storage module (20) and the preparation module (24),
and
whereby a work flow in the direction of the passenger section is created by the galley configuration (10, 90).

2. The aircraft of claim 1, wherein the aircraft galley (10, 90) further comprises:
a service module (26) disposed adjacent to the preparation module (24), at the rear end (14) of the aircraft galley (10, 90).

3. The aircraft of claim 1, wherein the heating module (22) is disposed adjacent to the storage module (20).

4. The aircraft of claim 1, wherein the preparation module (24) is disposed adjacent to the service module (26), between the service module (26) and the forward end (12) of the aircraft galley (10, 90).

5. The aircraft of claim 2, wherein the galley modules (20, 22, 24, 26) are disposed adjacent to each other and, from the forward end to the rear end of the aircraft galley (10, 90), such that they are positioned in the order of the storage module (20), the heating module (22), the preparation module (24), and the service module (26).

6. The aircraft of claim 1, wherein the heating module comprises an oven (36, 38).

7. The aircraft of claim 1, wherein the preparation module comprises a counter (42).

8. The aircraft of claim 2, wherein the service module (26) comprises a hot beverage maker (52, 92, 94).

9. The aircraft of claim 5, wherein the heating module (22) comprises a first retractable, pull-out, flat work surface (71).

10. The aircraft of claim 5, wherein the service module (26) comprises a second retractable, pull-out, flat work surface (70).

11. The aircraft of claim 9, wherein the service module (26) comprises a second retractable, pull-out, flat work surface (70), whereby a C-shaped work surface is created in combination with a counter by pulling out the first and second flat work surfaces (70, 71).

12. The aircraft of claim 1, wherein the preparation module (24) comprises an accessory cabinet for storage.

13. The aircraft claim 1, wherein the galley modules comprise a plurality of drawers and cabinet doors, and further wherein the drawers and doors define lines, and the drawers and doors are aligned to create a uniform line across the drawers and doors of the galley.

## Patentansprüche

1. Flugzeug, umfassend eine Flugzeugbordküche, wobei die Flugzeugbordküche (10, 90) eine Konfiguration aufweist, die sich entlang einer Längsachse eines Rumpfes (179) des Flugzeugs und auf einer Seite des Flugzeugs erstreckt, wobei die Bordküche umfasst:
ein vorderes Ende (12) der Bordküche, das einer Vorderseite des Flugzeugs am nächsten ist, und ein hinteres Ende (14) der Bordküche (10, 90) an einem gegenüberliegenden Längsende der Bordküche und einem Passagierbereich des Flugzeugs am nächsten; und
mehrere Bordküchenmodule (20, 22, 24, 26), die in der Bordküche (10, 90) zwischen dem vorderen und dem hinteren Ende (12, 14) der Bordküche angeordnet sind,
wobei die Bordküchenmodule (20, 22, 24, 26) umfassen:
ein Lagermodul (20), umfassend einen Kühlschrank (30, 32); ein Heizmodul (22); und
ein Vorbereitungsmodul (24), umfassend eine Spüle (110) mit einem Wasserhahn (112) und einer Armatur (116),
wobei das Lagermodul (20) an dem vorderen Ende (12) der Bordküche (10, 90) angeordnet ist, das Vorbereitungsmodul (24) näher an dem hinteren Ende (14) der Bordküche (10, 90) als das Lagermodul (20) angeordnet ist und das Heizmodul (22) zwischen dem Lagermodul (20) und dem Vorbereitungsmodul (24) angeordnet ist, und
wodurch durch die Bordküchenkonfiguration (10, 90) ein Arbeitsablauf in die Richtung des Fahrgastbereichs erzeugt wird.

2. Flugzeug nach Anspruch 1, wobei die Flugzeugbordküche (10, 90) ferner umfasst:
ein Bedienungsmodul (26), das neben dem Vorbereitungsmodul (24) an dem hinteren Ende (14) der Flugzeugbordküche (10, 90) angeordnet ist.

3. Flugzeug nach Anspruch 1, wobei das Heizmodul (22) neben dem Lagermodul (20) angeordnet ist.

4. Flugzeug nach Anspruch 1, wobei das Vorbereitungsmodul (24) neben dem Bedienungsmodul (26) zwischen dem Bedienungsmodul (26) und dem vorderen Ende (12) der Flugzeugbordküche (10, 90) angeordnet ist.

5. Flugzeug nach Anspruch 2, wobei die Bordküchenmodule (20, 22, 24, 26) nebeneinander und von dem vorderen Ende zu dem hinteren Ende der Flugzeugbordküche (10, 90) derart angeordnet sind, dass sie in der Reihenfolge des Lagermoduls (20), des Heizmoduls (22), des Vorbereitungsmoduls (24) und des Bedienungsmoduls (26) positioniert sind.

6. Flugzeug nach Anspruch 1, wobei das Heizmodul einen Ofen (36, 38) umfasst.

7. Flugzeug nach Anspruch 1, wobei das Vorbereitungsmodul einen Zähler (42) umfasst.

8. Flugzeug nach Anspruch 2, wobei das Bedienungsmodul (26) einen Heißgetränkehersteller (52, 92, 94) umfasst.

9. Flugzeug nach Anspruch 5, wobei das Heizmodul (22) eine erste einziehbare, herausziehbare, flache Arbeitsoberfläche (71) umfasst.

10. Flugzeug nach Anspruch 5, wobei das Bedienungsmodul (26) eine zweite einziehbare, herausziehbare, flache Arbeitsoberfläche (70) umfasst.

11. Flugzeug nach Anspruch 9, wobei das Bedienungsmodul (26) eine zweite einziehbare, herausziehbare, flache Arbeitsoberfläche (70) umfasst, wodurch eine C-förmige Arbeitsoberfläche in Kombination mit einem Zähler durch das Herausziehen der ersten und zweiten flachen Arbeitsoberfläche (70, 71) erzeugt wird.

12. Flugzeug nach Anspruch 1, wobei das Vorbereitungsmodul (24) einen Zubehörschrank für die Lagerung umfasst.

13. Flugzeug nach Anspruch 1, wobei die Bordküchenmodule mehrere Schubladen und Schranktüren umfassen und ferner wobei die Schubladen und Türen Linien definieren und die Schubladen und Türen ausgerichtet sind, um eine gleichmäßige Linie über die Schubladen und Türen der Bordküche zu erzeugen.

## Revendications

1. Aéronef comprenant une cuisine de bord d'aéronef, la cuisine de bord (10, 90) d'aéronef possédant une configuration s'étendant le long d'un axe longitudinal d'un fuselage (179) de l'aéronef et sur un côté de l'aéronef, la cuisine de bord comprenant :
une extrémité avant (12) de la cuisine de bord, la plus proche de l'avant de l'aéronef et une extrémité arrière (14) de la cuisine de bord (10, 90) sur une extrémité longitudinale opposée de la cuisine de bord et la plus proche d'une section des passagers de l'aéronef ; et
une pluralité de modules (20, 22, 24, 26) de cuisine de bord disposés dans la cuisine de bord (10, 90) entre les extrémités avant et arrière (12, 14) de la cuisine de bord,
lesdits modules (20, 22, 24, 26) de cuisine de bord comprenant :
un module de stockage (20) comprenant un réfrigérateur (30, 32);
un module de chauffage (22) ; et
un module de préparation (24) comprenant un évier (110) possédant un mitigeur (112) et un robinet (116),
ledit module de stockage (20) étant disposé au niveau de l'extrémité avant (12) de la cuisine de bord (10, 90), le module de préparation (24) étant disposé plus près de l'extrémité arrière (14) de la cuisine de bord (10, 90) que le module de stockage (20) et le module de chauffage (22) étant disposé entre le module de stockage (20) et le module de préparation (24), et
moyennant quoi un flux de travail en direction de la section des passagers est créé par la configuration de cuisine de bord (10, 90).

2. Aéronef selon la revendication 1, ladite cuisine de bord (10, 90) d'aéronef comprenant en outre :
un module de service (26) disposé adjacent au module de préparation (24), au niveau de l'extrémité arrière (14) de la cuisine de bord (10, 90) d'aéronef.

3. Aéronef selon la revendication 1, ledit module de chauffage (22) étant disposé adjacent au module de stockage (20).

4. Aéronef selon la revendication 1, ledit module de préparation (24) étant disposé adjacent au module de service (26), entre le module de service (26) et l'extrémité avant (12) de la cuisine de bord (10, 90) d'aéronef.

5. Aéronef selon la revendication 2, lesdits modules (20, 22, 24, 26) de cuisine de bord étant disposés les uns à côté des autres et, de l'extrémité avant à l'extrémité arrière de la cuisine de bord (10, 90) d'aéronef, de sorte qu'ils soient positionnés dans l'ordre du module de stockage (20), du module de chauffage (22), du module de préparation (24) et du module de service (26).

6. Aéronef selon la revendication 1, ledit module de chauffage comprenant un four (36, 38).

7. Aéronef selon la revendication 1, ledit module de préparation comprenant un comptoir (42).

8. Aéronef selon la revendication 2, ledit module de service (26) comprenant un dispositif de fabrication de boissons chaudes (52, 92, 94).

9. Aéronef selon la revendication 5, ledit module de chauffage (22) comprenant une première surface de travail plate, rétractable et coulissante (71).

10. Aéronef selon la revendication 5, ledit module de service (26) comprenant une seconde surface de travail plate, rétractable et coulissante (70).

11. Aéronef selon la revendication 9, ledit module de service (26) comprenant une seconde surface de travail plate, rétractable et coulissante (70), grâce à quoi une surface de travail en forme de C étant créée en combinaison avec un comptoir en faisant coulisser les première et seconde surfaces de travail plates (70, 71).

12. Aéronef selon la revendication 1, ledit module de préparation (24) comprenant une armoire d'accessoires destinée au stockage.

13. Aéronef selon la revendication 1, lesdits modules de cuisine de bord comprenant une pluralité de tiroirs et de portes d'armoire, et en outre lesdits tiroirs et lesdites portes définissant des rangées, et lesdits tiroirs et lesdites portes étant alignés pour créer une rangée uniforme à travers les tiroirs et les portes de la cuisine de bord.
